(19) **Europäisches Patentamt / European Patent Office / Office européen des brevets**

(11) **EP 3 883 029 B1**

(12) **FASCICULE DE BREVET EUROPEEN**

(45) Date de publication et mention de la délivrance du brevet:
**28.05.2025   Bulletin 2025/22**

(21) Numéro de dépôt: **21161807.9**

(22) Date de dépôt: **10.03.2021**

(51) Classification Internationale des Brevets (IPC):
**H01M 8/0432** (2016.01)   **H01M 8/0438** (2016.01)
**H01M 8/04537** (2016.01)   **H01M 8/04664** (2016.01)
**H01M 8/04992** (2016.01)   **H01M 8/1018** (2016.01)

(52) Classification Coopérative des Brevets (CPC):
**H01M 8/04671; H01M 8/04365; H01M 8/04395; H01M 8/04552; H01M 8/04559; H01M 8/04589; H01M 8/04641; H01M 8/04679; H01M 8/04992;** H01M 2008/1095; Y02E 60/50

(54) **METHODE ET SYSTEME DE DETERMINATION D'UN INDICATEUR DE DEGRADATION D'UNE PILE A COMBUSTIBLE**

METHODE UND SYSTEM ZUR BESTIMMUNG EINES DEGRADATIONSINDIKATORS EINER BRENNSTOFFZELLE

METHOD AND SYSTEM FOR DETERMINING A DEGRADATION INDICATOR OF A FUEL CELL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **18.03.2020   FR 2002622**

(43) Date de publication de la demande:
**22.09.2021   Bulletin 2021/38**

(73) Titulaire: **Commissariat à l'Energie Atomique et aux Energies Alternatives**
**75015 Paris (FR)**

(72) Inventeurs:
• **GRANDJACQUES, Mathilde**
  **38054 GRENOBLE CEDEX 09 (FR)**
• **GERARD, Mathias**
  **38054 GRENOBLE CEDEX 09 (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**DE-A1- 102016 116 049**

• **XIAN ZHANG ET AL: "An Unscented Kalman Filter Based Approach for the Health- Monitoring and Prognostics of a Polymer Electrolyte Membrane Fuel Cell", 1 January 2012 (2012-01-01), XP055751603, Retrieved from the Internet <URL:http://www.phmsociety.org/sites/ phmsociety.org/files/phm_submission/2012/ phmc_12_133.pdf> [retrieved on 20201117]**
• **BRESSEL MATHIEU ET AL: "Extended Kalman Filter for prognostic of Proton Exchange Membrane Fuel Cell", APPLIED ENERGY, ELSEVIER SCIENCE PUBLISHERS, GB, vol. 164, 21 December 2015 (2015-12-21), pages 220 - 227, XP029386943, ISSN: 0306-2619, DOI: 10.1016/ J.APENERGY.2015.11.071**
• **CHEN KUI ET AL: "Fuel cell health prognosis using Unscented Kalman Filter: Postal fuel cell electric vehicles case study", INTERNATIONAL JOURNAL OF HYDROGEN ENERGY, vol. 44, no. 3, 7 December 2018 (2018-12-07), pages 1930 - 1939, XP085571804, ISSN: 0360-3199, DOI: 10.1016/J.IJHYDENE.2018.11.100**

**Description**

L'invention concerne le domaine des piles à combustible, en particulier les piles à combustible pour alimenter des véhicules électriques, notamment des voitures électriques ou hybrides. L'invention adresse la problématique générale de la détection, la surveillance et le suivi de l'état de santé d'une pile à combustible en conditions opérationnelles. Plus précisément, l'invention porte sur une méthode et un système de détermination d'un indicateur de dégradation de la pile à combustible ou plus généralement d'une cellule de la pile à combustible. L'indicateur de dégradation est élaboré en estimant une perte de surface active d'une ou plusieurs cellules de la pile. L'invention propose également de fournir des indicateurs de provenance de la dégradation, parmi lesquels le noyage, l'assèchement ou les phénomènes de corrosion.

Plusieurs mécanismes de dégradation réversibles et irréversibles interviennent dans une cellule d'une pile à combustible. Ces dégradations affectent la plupart des composants d'une cellule. En particulier, le phénomène de dégradation impacte la couche active d'une cellule de sorte que la surface active peut diminuer au cours du temps, impactant le rendement global du dispositif.

La couche active d'une cellule englobe plusieurs éléments. Une couche active d'une cellule est organisée en un réseau microporeux constitué d'un ionomère, d'un support de catalyseur et d'un catalyseur. L'ionomère assure la conductivité protonique. Le support de catalyseur peut être du noir de carbone ou plus généralement du graphite poreux. Il assure la conductivité électronique et constitue un milieu poreux pour le transport des gaz et de l'eau liquide. Le catalyseur est le plus souvent à base de platine. Il est déposé sous forme de nanoparticules et permet d'augmenter la cinétique de la réaction électrochimique.

Il y a deux couches actives de part et d'autre de la membrane d'une cellule, l'une constituant l'anode et l'autre la cathode.

Au cours de la durée de vie de la pile à combustible, différents phénomènes de dégradation peuvent impacter la surface active d'une cellule.

La notion de surface active se distingue de la surface géométrique en ce qu'elle définit la surface développée totale qui participe aux réactions chimiques.

Ainsi, une dégradation de la surface active du catalyseur intervient lorsqu'on observe une perte de surface active de platine ou une altération des propriétés du catalyseur. La dégradation de la surface active du catalyseur peut être réversible, par exemple lorsqu'il s'agit d'une oxydation du platine, ou bien irréversible, par exemple lorsqu'il s'agit de phénomènes de dissolution-redéposition de platine.

Le support carbone du catalyseur peut aussi être impacté par la corrosion.

La surface géométrique de la membrane d'une cellule peut diminuer en présence d'eau liquide dans les canaux ou lors de la stratification en azote à l'anode.

De façon générale, la surface active d'une cellule désigne tous les éléments impliqués dans des réactions chimiques et qui peuvent être sujets aux dégradations énumérées ci-dessus.

Détecter les dégradations affectant une pile à combustible et identifier les causes des dégradations nécessite le plus souvent de démonter totalement la pile afin d'analyser l'état des membranes des cellules. Cela nécessite une maintenance du véhicule pour extraire la pile et l'analyser, ce qui présente des inconvénients.

Il existe un besoin pour des indicateurs qui puissent rendre compte de l'évolution de l'état de la pile à combustible sans avoir à la démonter. En particulier, il est souhaitable d'avoir des indicateurs de dégradation de l'état de chaque cellule de la pile afin de pouvoir améliorer l'efficacité de la maintenance et de la prévention des pannes.

Par ailleurs, il existe un besoin pour détecter certains défauts clef impactant directement les performances de la pile telle qu'un défaut de gestion de l'eau qui peut provoquer un assèchement ou un noyage, ou encore une dégradation du catalyseur.

Il est possible d'obtenir une première indication de la présence d'une dégradation à partir d'une mesure de la pression ou de la tension, cependant cette indication n'est pas suffisante pour caractériser le problème.

Un premier type de solutions permettant de surveiller l'évolution de l'état de santé d'une pile à combustible consiste à introduire des capteurs in-situ afin de réaliser des mesures locales. Cette solution présente l'inconvénient d'être intrusive et de fait d'être sensible aux risques de fuites d'hydrogène à l'intérieur de la pile. Par ailleurs, elle est difficile à mettre en place du fait des dimensions très petites des différents composants, par exemple les couches actives ont une épaisseur de quelques micromètres. Par ailleurs, les mesures doivent être le moins invasives possibles de sorte à ne perturber ni la mesure ni le fonctionnement de la pile. Enfin, pour obtenir un diagnostic suffisamment précis, le dispositif de mesure doit être complet pour permettre un accès à des mesures de différentes grandeurs physiques ce qui peut entrainer un surcout de sur-instrumentation.

Il existe principalement trois types de systèmes de mesure adaptés pour être embarqués dans une pile à combustible. Un premier type de dispositif est une cellule segmentée qui consiste le plus souvent en une modification d'une plaque bipolaire pour y inclure des capteurs à sa surface selon un maillage prédéfini. Un inconvénient de cette technologie est qu'elle est invasive et pas aisément réalisable.

Un deuxième type de solution concerne les méthodes de mesure par magnéto-tomographie. Ce type de méthode requiert un large espace autour de la pile pour le positionnement des capteurs. Elle présente l'inconvénient d'être impossible à mettre en œuvre pour des piles à combustible en fonctionnement embarquées dans un véhicule. Par ailleurs, la méthode présente une complexité de calcul importante.

Une troisième solution consiste à insérer une carte électronique dédiée aux mesures dans la pile. Cette solution présente aussi des inconvénients.

La densité de courant et la température mesurée par le dispositif sont en réalité le résultat d'une moyenne des valeurs pour chaque ensemble « AME » (Assemblage Membrane Electrode) de part et d'autre de la cellule intégrant la carte. Le placement de celle-ci aux extrémités du stack (première ou dernière cellule) doit donc être évité pour ne pas prendre en compte les effets de bord. De plus, malgré une conductivité électrique de la carte censée être plus élevée dans l'épaisseur que dans le plan, ainsi qu'un effort réalisé pour isoler électriquement chacun des segments, une étude a montré qu'il peut y avoir création de courants latéraux à la surface de la carte. L'image de la densité de courant mesurée sera alors affectée et l'information concernant les hétérogénéités peut être dégradée. D'autre part, la mesure de la densité de courant est dépendante du contact électrique entre les plaques distributrices et les cellules voisines. Puisque les plaques bipolaires sont parcourues de canaux, le contact entre la surface plane de la carte électronique et ces plaques à lieu uniquement sur les dents. Il convient de noter que d'autres effets peuvent apparaitre sur les cartographies mesurées et qui ne sont pas liés directement à l'outil de mesure. Les points de soudures existant entre les deux demi-plaques permettant de former une plaque bipolaire sont également problématiques dans le sens où leur conductivité électrique est supérieure à celle des plaques. Elles constituent donc un point préférentiel pour le passage du courant. De même, lors de l'assemblage de la pile, celui-ci est pressé puis maintenu par des tirants sur sa périphérie. Le contact électrique est donc meilleur sur les bords, ce qui peut constituer un autre point préférentiel pour le passage du courant et apparaître sur les contours des cartographies de courant mesurées. Malgré une mise en place compliquée, l'utilisation de cette carte peut être envisagée à l'échelle laboratoire pour la compréhension et la validation expérimentale. Cependant, trop de modifications dans la pile sont à faire si l'on veut avoir un suivi individualisé de chaque cellule (plus de 70 en général) et donc par conséquent trop de phénomènes parasites seront créés.

Un autre type de solution, moins intrusive que celles basées uniquement sur des capteurs embarqués, consiste à modéliser le comportement physique de la pile à combustible afin de détecter des déviations par rapport au modèle.

La modélisation est une alternative aux essais expérimentaux qui peuvent être longs et coûteux et pas forcément complets. Elle permet d'accéder au comportement interne de la pile à combustible (conditions locales du cœur de pile) et de comprendre les hétérogénéités existantes à la surface de la cellule.

De nombreux modèles ont été développés dans la littérature tentant de rendre compte des échanges de chaleur et de masse, des répartitions d'humidité relative, des densités de courant suivant des directions de flux de gaz entrant et d'autres paramètres physiques.

Les documents « An Unscented Kalman Filter based approach for the health monitoring and prognostics of a polymer electrolyte membrane fuel cell, Xian Zhang et al" et "Extended Kalman Filter for prognostic of proton exchange membrane fuel cell, Bressel Mathieu et al" divulguent des exemples de tels modèles.

Les modèles proposés dans la littérature sont le plus souvent des modèles physiques à plusieurs entrées qui doivent prendre en considération la géométrie de la cellule. Ils sont souvent très détaillés, visent à recréer au mieux les phénomènes physiques qui se produisent au cœur de la pile et sont basés sur des équations différentielles afin de pouvoir rendre compte des échanges. Ces modèles sont souvent longs en temps de calcul pour avoir une résolution de qualité. Les variables d'entrées nécessaires sont obtenues pour la plus part à partir de caractérisations effectuées sur banc de test dans des conditions données. Une fois les conditions locales obtenues via ces modèles, on peut estimer la perte de surface active d'une cellule.

Pour estimer une perte de surface active, les auteurs de la référence [1] se basent sur une loi semi-empirique, qui découle de la loi de Butler-Volmer, permettant d'exprimer la surtension par maille en fonction des conditions locales des couches actives anodique et cathodique.

Pour calculer les paramètres du modèle, plusieurs caractérisations sur banc de test sont nécessaires pour différentes valeurs de courant, pression, humidité et température.

Cette méthode permet d'obtenir une estimée de l'évolution de la surface active de manière très ponctuelle et surtout en dehors des conditions opérationnelles (les mesures doivent être effectuées sur banc de test).

L'invention propose une méthode de détermination d'un indicateur de dégradation qui est basée sur un modèle simplifié et qui permet de s'affranchir des mesures réalisées sur banc de test. Ainsi, l'invention se base sur un modèle électrochimique du fonctionnement de la pile qui est exploité pour déterminer un indicateur de perte de surface active, au cours du temps, à partir d'un filtre de Kalman. L'invention exploite des mesures qui peuvent être réalisées via des capteurs embarqués et ainsi ne nécessite pas l'extraction de la pile du véhicule. La méthode est ainsi peu intrusive.

La méthode proposée permet de surveiller en temps réel l'évolution de la surface active d'une ou plusieurs cellules de la pile. Elle fournit en outre un indicateur de provenance de la dégradation de la surface active qui permet d'améliorer l'aide au diagnostic de maintenance de la pile.

L'invention a pour objet une méthode, mise en œuvre par ordinateur, de détermination d'un indicateur de dégradation d'au moins une cellule d'une pile à combustible comprenant une pluralité de cellules ayant chacune une surface active, la méthode comprenant les étapes récursives de, à chaque nouvel instant t :

- Recevoir un ensemble de mesures de grandeurs physiques caractéristiques du fonctionnement de la pile à combustible,

- Appliquer un filtre de Kalman auxdites mesures, le filtre de Kalman étant défini à partir d'un modèle électrochimique du fonctionnement de la pile à combustible reliant lesdites grandeurs physiques à une variable d'état représentative d'une perte de la surface active entre un instant initial et l'instant t,

- Déterminer l'indicateur de dégradation à partir de la variable d'état estimée par le filtre de Kalman.

Selon une variante de réalisation, la méthode selon l'invention comprend une étape de linéarisation du modèle électrochimique pour modéliser le fonctionnement de la pile à combustible sous la forme d'un système dynamique dont les états sont estimables par un filtre de Kalman.

Selon un aspect particulier de l'invention, ledit ensemble de mesures comprend une mesure de la tension aux bornes d'un groupe de cellules de la pile à combustible comprenant au moins une cellule, une mesure du courant ou de la densité de courant traversant la pile à combustible, une mesure de la température, une mesure de la pression d'oxygène dans la pile à combustible, une mesure de la résistance de la membrane d'au moins une cellule.

Selon un aspect particulier de l'invention, le modèle électrochimique du fonctionnement de la pile à combustible est un modèle de la surtension aux bornes dudit groupe de cellules.

Selon une variante de réalisation, la méthode selon l'invention comprend la détermination d'une estimée de la surtension aux bornes dudit groupe de cellules à partir de la mesure de tension aux bornes dudit groupe de cellules, de la mesure du courant et de la mesure de la résistance de la membrane d'au moins une cellule.

Selon un aspect particulier de l'invention, la mesure de tension est réalisée aux bornes de la pile à combustible et est moyennée pour produire une estimée de la tension moyenne aux bornes d'une ou plusieurs cellule(s) de la pile.

Selon une variante de réalisation, la méthode selon l'invention comprend, pour un groupe d'au moins une cellule, la détermination d'un premier indicateur de référence calculé à partir de l'estimée de la tension moyenne et d'un second indicateur individualisé calculé à partir d'une mesure de la tension aux bornes dudit groupe, la méthode comprenant en outre une étape de déterminer, pour au moins une grandeur physique dudit modèle électrochimique, un coefficient de correction de la mesure associée, le coefficient de correction étant déterminé de manière à prendre en compte l'influence de la grandeur physique sur les différences observées entre le premier indicateur de référence et le second indicateur individualisé.

Selon une variante de réalisation, la méthode selon l'invention comprend les étapes de :

- Exprimer le premier indicateur de référence et le second indicateur individualisé dans une base définie par les grandeurs physiques à partir dudit modèle électrochimique,

- Convertir le premier indicateur de référence et le second indicateur individualisé dans une base orthogonalisée,

- Identifier les coefficients du premier indicateur de référence dans la base orthogonalisée avec les coefficients du second indicateur individualisé dans la base orthogonalisée,

- En déduire un coefficient de correction de la mesure de chaque grandeur physique.

Selon une variante de réalisation, la méthode selon l'invention comprend, en outre une étape de déterminer un indicateur de provenance de la dégradation parmi lesquels un indicateur de dégradation par noyage, un indicateur de dégradation par assèchement, un indicateur de dégradation par corrosion.

Selon une variante de réalisation, la méthode selon l'invention comprend, une étape de générer, pour au moins une grandeur physique caractéristique du fonctionnement de la pile à combustible, un indicateur intermédiaire de dégradation liée à l'influence de cette grandeur physique, à partir du coefficient de correction déterminé pour cette grandeur physique.

Selon une variante de réalisation, la méthode selon l'invention comprend la détermination de l'indicateur de provenance de la dégradation à partir d'une combinaison de plusieurs indicateurs intermédiaires de dégradation liée à l'influence de différentes grandeurs physiques.

L'invention a aussi pour objet un programme d'ordinateur comportant des instructions pour l'exécution de la méthode de détermination d'un indicateur de dégradation d'au moins une cellule d'une pile à combustible selon l'invention, lorsque le programme est exécuté par un processeur.

L'invention a aussi pour objet un support d'enregistrement lisible par un processeur sur lequel est enregistré un programme comportant des instructions pour l'exécution de la méthode de détermination d'un indicateur de dégradation d'au moins une cellule d'une pile à combustible selon l'invention, lorsque le programme est exécuté par un processeur.

L'invention a aussi pour objet un système pour déterminer un indicateur de dégradation d'au moins une cellule d'une pile à combustible comprenant une pluralité de cellules, , le système comprenant plusieurs capteurs pour mesurer différentes grandeurs physiques caractéristiques du fonctionnement de la pile à combustible et un calculateur pour exécuter la méthode de détermination d'un indicateur de dégradation selon l'invention.

Selon une variante de réalisation, le système selon l'invention comprend en outre une interface visuelle pour afficher au moins une représentation graphique générée par le calculateur.

Selon un aspect particulier de l'invention, le système et la pile à combustible sont embarqués dans un véhicule en fonctionnement.

D'autres caractéristiques et avantages de la présente invention apparaîtront mieux à la lecture de la description qui suit en relation aux dessins annexés suivants :

[Fig. 1] la figure 1 représente un schéma d'une pile à combustible,

[Fig. 2] la figure 2 représente un schéma d'une pile à combustible équipée de capteurs pour réaliser des mesures,

[Fig. 3] la figure 3 représente un organigramme détaillant les étapes de mise en œuvre d'une méthode de détermination d'un indicateur de dégradation d'au moins une cellule d'une pile à combustible selon un premier mode de réalisation de l'invention,

[Fig. 4] la figure 4 représente un schéma d'un filtre de Kalman appliqué à un modèle électrochimique du fonctionnement de la pile,

[Fig. 5] la figure 5 représente un organigramme détaillant les étapes de mise en œuvre d'une méthode de détermination d'un indicateur de dégradation locale à une ou plusieurs cellules, selon un deuxième mode de réalisation de l'invention,

[Fig. 6] la figure 6 représente un organigramme détaillant les étapes de mise en œuvre d'une méthode de détermination d'un indicateur de provenance de la dégradation selon un troisième mode de réalisation de l'invention,

[Fig. 7] la figure 7 représente deux courbes de probabilité utilisées pour déterminer des indicateurs intermédiaires,

[Fig. 8] la figure 8 représente deux autres courbes de probabilité utilisées pour déterminer un indicateur intermédiaire.

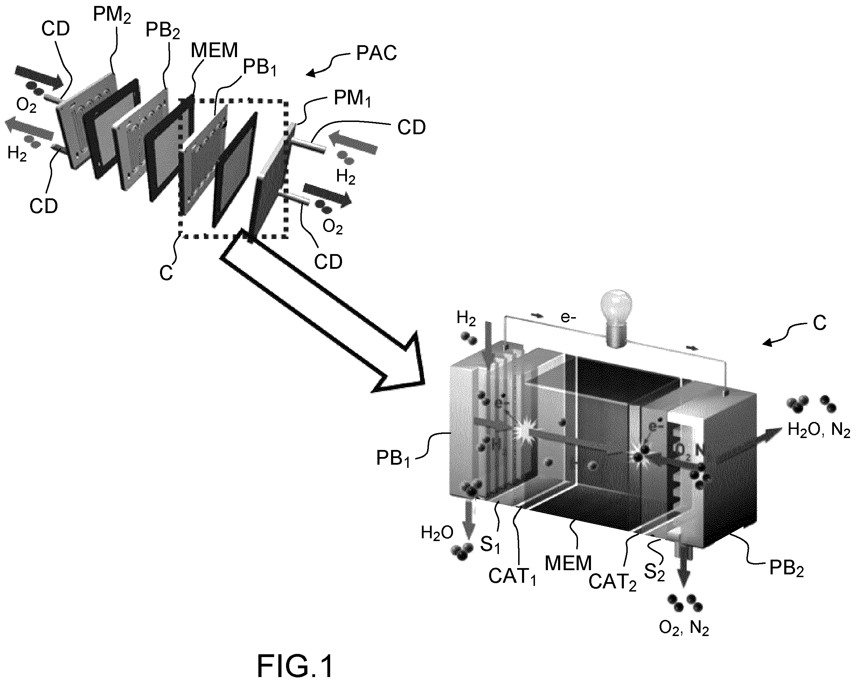

La figure 1 représente, sur un schéma, une pile à combustible PAC composée de plusieurs cellules C montées en série. Chaque cellule comprend une membrane MEM disposée entre deux plaques bipolaires PB1, PB2. A chaque extrémité opposée de la pile à combustible, une plaque monopolaire PM1, PM2 est pourvue de canaux CD de distribution d'hydrogène et d'oxygène pour alimenter la pile.

Sur la droite de la figure 1, on a représenté une seule cellule élémentaire C de la pile à combustible PAC. Une cellule C comprend les éléments suivants agencés en série : une première plaque bipolaire PB1, un premier support S1, un premier catalyseur CAT1, une membrane MEM, un second catalyseur CAT2, un second support S2, une seconde plaque bipolaire PB2.

Une pile à combustible PAC est soumise à une dégradation au cours du temps principalement du fait de la dégradation des membranes MEM.

L'ensemble des cellules de la pile à combustible PAC est traversée par un même courant, cependant la densité locale de courant peut ne pas être uniforme dans une cellule et peut avoir une répartition spatiale différente d'une cellule à l'autre du fait de la dégradation potentielle des membranes MEM au cours du temps.

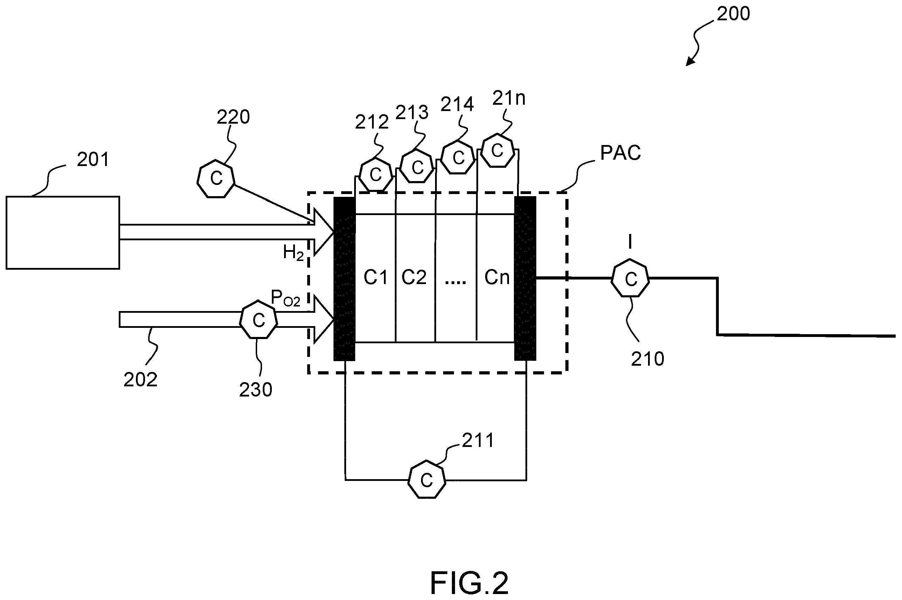

La figure 2 schématise un dispositif 200 comprenant une pile à combustible équipée de capteurs et associée à un transmetteur, pour mettre en œuvre l'invention.

Le dispositif 200 comporte une pile à combustible PAC, du type de celle décrite à la figure 1. La pile PAC est alimentée d'une part en hydrogène par un réservoir 201 et d'autre part en air par un canal de distribution 202. L'air traverse un compresseur et un humidificateur (non représentés à la figure 2) pour apporter de l'oxygène, à la pression et l'humidité requises, à la pile PAC.

Le dispositif 200 est pourvu de plusieurs capteurs pour mesurer plusieurs grandeurs physiques caractéristiques du fonctionnement de la pile à combustible PAC. Ainsi, un instrument de mesure du courant 210, par exemple un ampèremètre, est disposé en sortie de la pile à combustible PAC pour mesurer le courant I traversant la pile ou la densité de courant moyenne. Un instrument de mesure de la tension 211 est disposé aux bornes de la pile à combustible PAC pour mesurer la tension U aux bornes de la pile. Dans un mode de réalisation particulier de l'invention, la tension peut aussi être mesurée aux bornes d'une ou de plusieurs cellule(s) de la pile au moyen d'un ou de plusieurs voltmètres 212,213,214,21n.

Le dispositif 200 comporte en outre un capteur 220 de mesure de la température T disposé à proximité de la pile PAC ou d'une cellule de la pile. Il comporte également un capteur 230 de mesure de la pression de gaz, disposé au niveau de l'arrivée d'oxygène de la pile.

Le dispositif 200 comporte également des moyens de traitement des mesures fournies par les différents capteurs pour mettre en œuvre l'invention afin de produire un ou plusieurs indicateur(s) de dégradation de la pile ou d'une cellule de la pile. Ces moyens (non représentés sur la figure 2) prennent la forme, par exemple, d'un processeur embarqué et d'une mémoire ou encore d'un transmetteur sans fil apte à transmettre les mesures réalisées par les différents capteurs vers un organe de contrôle distant configuré pour réaliser l'invention.

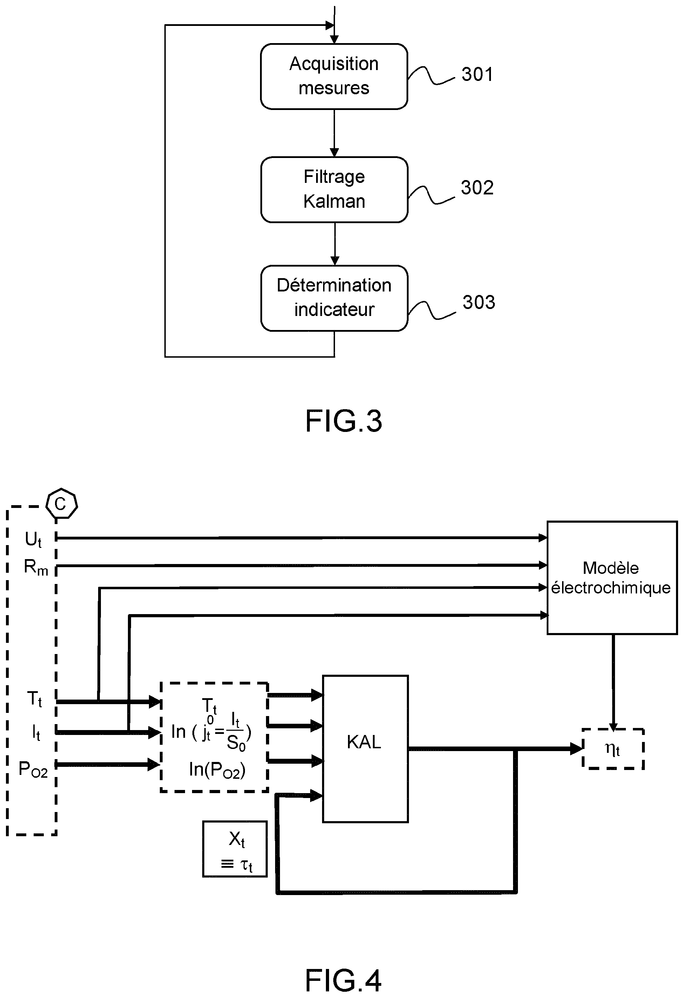

La figure 3 représente, sur un organigramme, les étapes de mise en œuvre d'une méthode de détermination d'un indicateur de dégradation d'au moins une cellule d'une pile à combustible selon un premier mode de réalisation de l'invention.

La méthode a pour objectif de déterminer, à différents instants t successifs, un taux de dégradation de la pile à combustible ou d'une cellule de la pile ou encore d'un groupe de cellules de la pile.

La méthode débute par une étape 301 d'acquisition de mesures au moyen des différents capteurs du dispositif 200. Les mesures sont réalisées pour différents instants t successifs. Un modèle électrochimique du fonctionnement de la pile est ensuite utilisé pour déterminer 302, au moyen d'un filtre de Kalman, une estimée de la perte de surface active à chaque instant t. Un indicateur de dégradation est enfin déterminé 303 à partir de la variable d'état du filtre de Kalman. Les étapes du procédé sont itérées au cours du temps afin de fournir, pour chaque nouveau jeu de mesures, un nouvel indicateur.

L'invention se base sur le modèle électrochimique décrit dans la référence [1].

[Math. 1]

$$\eta = \beta_0 + \beta_1 T + \beta_2 T ln(j_t) + \beta_3 T ln\left(\frac{P_{O_2}}{P_0}\right) + \beta_4 T ln\left(\frac{P_H}{P_0}\right) \quad (1)$$

$\eta$ est une surtension, T est la température, $P_{O_2}$ est la pression de l'air, $P_H$ est la pression de l'hydrogène, $P_0$ est la pression atmosphérique

Dans une variante de réalisation de l'invention, le modèle électrochimique n'est pas régulé en pression, dans ce cas, le terme $\frac{P_H}{P_0}$ est égal à 1.

$j_t$ est la densité de courant locale définie par la relation suivante :

[Math. 2]

$$j_t = \frac{i_t}{S_t} = \frac{i_t * S_0}{S_0 * S_t} = j_t^0 \frac{S_0}{S_t} \quad (2)$$

$i_t$ est le courant mesuré à l'instant t, $S_t$ est la surface active à l'instant t et $S_0$ est la surface active initiale. $j_t^0$ est la densité de courant moyenne.

Les coefficients $\beta_0$, $\beta_1$, $\beta_2$, $\beta_3$, $\beta_4$ sont des paramètres du modèle.

La température T, la densité de courant $j_t^0$ et la pression de l'air $P_{O_2}$, sont mesurées à l'aide des capteurs du dispositif 200.

La surtension est obtenue à l'aide de la relation suivante :

[Math. 3]

$$\eta = U - E_{rev} + R_{Tot} I \quad (3)$$

U est la tension mesurée aux bornes de la pile ou d'une cellule ou d'un groupe de cellules.

$E_{rev}$ est une tension réversible qui peut être déterminée à partir d'un bilan thermochimique tel que décrit par exemple dans la référence [2].

$R_{tot} = R_m + R_c$, est une résistance totale déterminée à partir d'une résistance $R_m$ de la membrane et d'une valeur fixe, par exemple égale à $R_c = 3 * 10^{-7} \Omega$ .

La résistance $R_m$ de la membrane peut être obtenue via différentes méthodes d'obtention. Des exemples de méthodes de mesures sont décrits dans la référence [3].

Le ratio $\frac{S_0}{S_t}$ donne le rapport entre la surface active initiale et la surface active à l'instant t. Ce ratio donne une indication de la perte de surface active au cours du temps et donc de la dégradation de la pile ou d'une cellule.

Pour déterminer ce ratio, on utilise un filtre de Kalman défini à l'aide d'un modèle dont la variable d'état est le ratio $\frac{S_0}{S_t}$, ce modèle découlant de la relation (1).

Pour pouvoir appliquer un filtre de Kalman, il convient au préalable de linéariser le modèle donné par la relation (1). Cette linéarisation est obtenue en dérivant l'équation (1) par rapport à la température.

On obtient alors le modèle exprimé à l'équation (4) puis équation (5).

[Math. 4]

$$\frac{\eta_t}{T_t} = \beta_1 + \beta_0 \frac{1}{T_t} + \beta_2 ln(j_t) + \beta_3 ln\left(\frac{P_{O_{2t}}}{P_0}\right) \quad (4)$$

[Math. 5]

$$\frac{\eta_t}{T_t} = \beta_1 + \beta_0 \frac{1}{T_t} + \beta_2 ln(j_t^0) + \beta_3 ln\left(\frac{P_{O_{2t}}}{P_0}\right) + +\beta_2 \ln\left(\frac{S_0}{S_t}\right) \quad (5)$$

Les indices t dans l'équation (5) indiquent que les différentes mesures sont réalisées à l'instant t.

A partir de cette équation, on peut définir le modèle d'état suivant :

[Math. 6]

$$| Y_t = A_t X_t + \varepsilon_t \sim N(0, H_t) \quad (6)$$

[Math. 7]

$$X_{t+1} = B_t X_t + \omega_t \sim N(0, Q_t) \quad (7)$$

$H_t$ et $Q_t$ sont les matrices de covariance du bruit $\varepsilon_t$ et $\omega_t$ suivant une loi normale.

[Math. 8]

$$Y_t = \frac{\eta_t}{T_t} \quad (8)$$

| [Math 9]

$$| A_t = (\gamma \quad \frac{1}{T_t} \quad \ln(j_t^0) \quad ln\left(\frac{P_{O_{2t}}}{P_0}\right) \quad 0 \quad 0 \quad 0 \quad 0)$$

[Math 10]

$$B_t = \begin{pmatrix} \lambda & 0 & 0 & 0 & 0 & 1 & \dfrac{1}{T_t} & \ln(j_t^0) & ln(\dfrac{(P_{O_2})_t}{P_0}) \\ 0 & 1 & 0 & 0 & 0 & 0 & 0 & 0 & 0 \\ 0 & 0 & 1 & 0 & 0 & 0 & 0 & 0 & 0 \\ 0 & 0 & 0 & 1 & 0 & 0 & 0 & 0 & 0 \\ 0 & 0 & 0 & 0 & 1 & 0 & 0 & 0 & 0 \\ 0 & 0 & 0 & 0 & 0 & 1 & 0 & 0 & 0 \\ 0 & 0 & 0 & 0 & 0 & 0 & 1 & 0 & 0 \\ 0 & 0 & 0 & 0 & 0 & 0 & 0 & 1 & 0 \\ 0 & 0 & 0 & 0 & 0 & 0 & 0 & 0 & 1 \end{pmatrix}$$

[Math 11]

$$^T(X_t) = \begin{pmatrix} \ln\left(\dfrac{S_0}{S_t}\right) & \alpha_0 & \alpha_1 & \alpha_2 & \alpha_3 & C_1 & C_2 & C_3 & C_4 \end{pmatrix}$$

Dans une variante de réalisation de l'invention, lorsqu'une mesure de la pression d'hydrogène est disponible, les équations (4) et (5) ainsi que le modèle du filtre de Kalman peuvent être adaptés en tenant compte de cette mesure supplémentaire.

Un avantage à la modélisation ci-dessus réside dans le fait que les paramètres $\alpha_i$ et $\ln(\frac{S_0}{S_t})$ sont estimés via le filtre de Kalman et non par maximum de vraisemblance.

Le paramètre $\lambda$ est, par exemple, estimé par un algorithme du type EM (Expectation Maximisation).

A chaque pas de temps par application de ce filtre, la surface active est estimée. On obtient alors :

$$S_t = S_0 \exp(-X_t[1])$$

On peut définir ainsi un taux de dégradation :

$$\tau_t = 1 - \frac{S_t}{S_0} \text{ ou } \tau_t = \frac{S_t}{S_0}$$

selon la convention choisie

La figure 4 représente sur un schéma l'application du filtre de Kalman au modèle déterminé à partir des mesures fournies par les différents capteurs.

A chaque instant t, le filtre de Kalman KAL reçoit en entrée les mesures de température $T_t$, densité de courant moyenne $j_t^0$ et pression d'air $P_{O2}$ ainsi que tension $U_t$ et résistance de la membrane $R_m$. La variable d'observation $Y_t$ est calculée à partir des équations (8) et (3) et la variable d'état $X_t$ est calculée via le filtre de Kalman KAL (équations (6) et (7))

A partir de la variable d'état $X_t$, on en déduit la perte de surface active puis le taux de dégradation.

On décrit à présent un deuxième mode de réalisation de l'invention qui vise à prendre en compte les phénomènes d'hétérogénéité entre cellules d'une pile.

Le premier mode de réalisation décrit précédemment prend comme donnée d'entrée la mesure d'une tension U aux bornes soit de la pile, soit d'un groupe de cellules, soit d'une cellule spécifique (voir équation (3)).

Cependant, dans un cas d'application opérationnel, les mesures s'effectuent en général sur l'ensemble de la pile, et il est souvent difficile d'accéder aux conditions locales au cœur d'une pile à combustible et l'on sait que par nature les cellules d'une pile sont non homogènes. Il reste cependant faisable industriellement de prévoir l'ajout d'une mesure de tension (mais pas des autres grandeurs) au niveau des différentes cellules.

Le deuxième mode de réalisation de l'invention a donc pour objectif de comparer le taux de dégradation global de la pile, calculé à partir d'une mesure de tension aux bornes de la pile, avec un taux de dégradation local à une cellule (ou un groupe de cellules) et d'en déduire des coefficients de correction des mesures (autres que la tension) pour pouvoir corriger le taux de dégradation local.

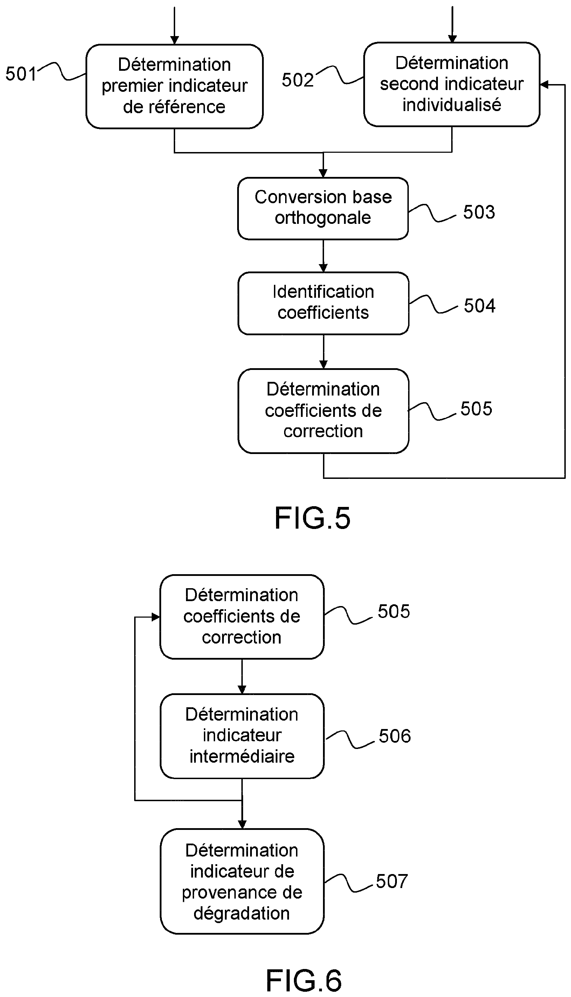

La figure 5 décrit, sur un organigramme, les étapes de mise en œuvre de la méthode selon le deuxième mode de réalisation de l'invention.

Les deux premières étapes 501,502 consistent à appliquer le premier mode de réalisation de l'invention (décrit à la figure 3) pour obtenir d'une part un premier indicateur de référence de dégradation moyenne d'une cellule de la pile et d'autre part un second indicateur de dégradation individualisé pour une cellule. Alternativement, la méthode peut être appliquée à un groupe de cellules au lieu d'une cellule individuelle. Par la suite, on décrit le principe de cette méthode en considérant une cellule individuelle.

Le premier indicateur de référence $\tau_t^{REF}$ est obtenu en appliquant la méthode de la figure 3 à partir d'une mesure de tension globale aux bornes de la pile divisée par le nombre de cellules pour obtenir une tension moyenne aux bornes de la cellule. Ce premier indicateur de référence est donc identique pour chaque cellule de la pile puisque les mesures utilisées pour déterminer l'indicateur de dégradation sont les mêmes pour chaque cellule.

Le second indicateur individualisé $\tau_t^i$ est déterminé, pour chaque cellule identifiée par l'indice i, à partir d'une mesure de tension locale aux bornes de cette cellule.

Le second indicateur de dégradation individualisé est plus proche de la réalité car il prend en compte la tension locale aux bornes de la cellule au lieu d'une tension moyenne. Cependant, les autres mesures, c'est-à-dire la température, la pression et la densité de courant, sont toujours considérées comme identiques pour chaque cellule.

Un objectif du second mode de réalisation de l'invention est de déterminer la contribution de chaque mesure aux différences observées entre l'indicateur de dégradation de référence et l'indicateur de dégradation individualisé.

En repartant de la relation (5), il est possible d'exprimer les deux indicateurs de dégradation $\tau_t^{REF}$ et $\tau_t^i$ de la façon suivante

[Math. 12]

$$\ln(\tau_t^{REF}) = \pi_0^{REF} + \pi_1^{REF}\frac{\eta_0^{REF}}{T_t} + \pi_2^{REF}\ln(j_t^0) + \pi_3^{REF}\frac{1}{T_t} + \pi_4^{REF}ln\left(\frac{P_{O_{2t}}}{P_0}\right) \quad (12)$$

[Math. 13]

$$\ln(\tau_t^i) = \pi_0^i + \pi_1^{REF}\frac{\eta_0^i}{T_t} + \pi_2^i\ln(j_t^0) + \pi_3^i\frac{1}{T_t} + \pi_4^i ln\left(\frac{P_{O_{2t}}}{P_0}\right) \quad (13)$$

Dans une variante de réalisation de l'invention, lorsqu'une mesure de la pression d'hydrogène est disponible, les équations (12) et (13) peuvent être adaptées en tenant compte de cette mesure supplémentaire, en ajoutant un terme dépendant de la pression d'hydrogène dans ces équations.

Les relations (12) et (13) permettent d'exprimer le logarithme népérien de chaque indicateur dans une base B définie par le vecteur suivant :

$$B = (1, U_t^{REF}, \ln(j_t^0), \frac{1}{T_t}, ln\left(\frac{P_{O_{2t}}}{P_0}\right))$$

La tension $U_t^{REF}$ mesurée aux bornes de la pile est utilisée pour calculer les surtensions $\eta_0^{REF}$ et $\eta_0^i$.

Ainsi, chaque indicateur est défini dans la base B par un jeu de coefficients.

Pour pouvoir comparer les deux indicateurs en identifiant les coefficients termes à termes, il est nécessaire, au préalable, d'orthogonaliser 503 la base B.

L'orthogonalisation de la base B est, par exemple, réalisée au moyen d'une méthode de Graham Schmidt tel que décrit par exemple dans la référence [4].

La base B est notée B = (1,$Z_1$, $Z_2$, $Z_3$, $Z_4$), où les variables $Z_i$ désignent les différentes grandeurs physiques définissant la base B, ces variables étant ordonnées selon un ordonnancement choisi. Le choix de l'ordonnancement est, par exemple, réalisé en imposant certaines hypothèses sur les grandeurs mesurées.

Après orthogonalisation, la nouvelle base $B_{orth}$ devient $B_{orth}$ = ($u_0$, $u_1$, $u_2$, $u_3$, $u_4$).

Les équations (12) et (13) sont ensuite réécrites dans la nouvelle base $B_{orth}$.

[Math. 14]

$$|\ln(\tau_t^{REF}) = \Pi_0^{REF} u_0 + \pi_1^{REF} u_1 + \pi_2^{REF} u_2 + \pi_3^{REF} u_3 + \pi_4^{REF} u_4 \quad (14)$$

[Math. 15]

$$\ln(\tau_t^i) = \Pi_0^i u_0 + \Pi_1^i u_1 + \Pi_2^i u_2 + \Pi_3^i u_3 + \Pi_4^i u_4 \quad (15)$$

Dans la nouvelle base orthogonale $B_{orth}$, il est ensuite possible, dans une étape 504, d'identifier les coefficients des deux équations (14) et (15). Ainsi, si des différences termes à termes existent entre les coefficients des deux relations, elles sont dues à une différence dans les conditions opératoires.

On cherche alors à corriger les conditions opératoires dans lesquelles l'indicateur de dégradation individualisé est obtenu, c'est-à-dire corriger les mesures réalisées pour produire cet indicateur.

L'étape 504 d'identification des coefficients des deux équations (14) et (15) consiste à réaliser les calculs suivants.

On définit une nouvelle base $B^i_{orth}$ aux conditions opératoires modifiées. $B^i_{orth}$ = ($u'_0$, $u'_1$, $u'_2$, $u'_3$, $u'_4$). Dans cette nouvelle base $B^i_{orth}$, on identifie les termes des deux équations (14) et (15) :

[Math. 16]

$$\Pi_k^i u'_k = \Pi_k^{REF} u_k \quad (16) \qquad\qquad \text{pour k variant de 0 à 4}$$

On fixe ensuite $u'_k = \lambda_k \cdot u_k$, avec $\lambda_k$ un coefficient permettant de passer de la base $B_{orth}$ vers la base $B^i_{orth}$. On en déduit $\lambda_k = \dfrac{\Pi_k^{REF}}{\Pi_k^i}$.

La base $B^i_{orth}$ est une base orthogonale qui correspond à une base opératoire $B^i$ non orthogonale définie comme $B^i$ = (1,$Z^i_1$, $Z^i_2$, $Z^i_3$, $Z^i_4$) avec $Z^i_k = \mu_k \ast Z_k$ pour k variant de 0 à 4.

On peut démontrer ensuite que $\mu_k$ = 1/ $\lambda_k$ pour k variant de 0 à 4.

Au final, on détermine, via l'étape 505, les coefficients de correction $\mu_k$ à appliquer aux conditions opératoires $Z_k$ :

[Math. 17]

$$\mu_k = \frac{\Pi_k^i}{\Pi_k^{REF}} \quad (17)$$

Ainsi, à l'issue de l'étape 505, on obtient les coefficients de correction $\mu_k$ à appliquer aux composantes $Z_k$ de la base B dans laquelle est exprimé l'indicateur individualisé $\tau_t^i$ afin de produire un indicateur individualisé corrigé.

Le deuxième mode de réalisation de l'invention permet de fournir un indicateur de dégradation local pour chaque cellule, qui prend en compte l'hétérogénéité entre cellules. Cet indicateur est, par exemple, utilisé, en comparaison avec un seuil d'alerte pour déclencher une maintenance de la pile lorsqu'un nombre significatif de cellules sont dégradées. Il permet aussi un diagnostic local du fonctionnement de chaque cellule, ce qui présente l'avantage de pouvoir prévenir de façon plus précise l'évolution des dégradations impactant chaque cellule de façon individuelle.

On décrit à présent un troisième mode de réalisation de l'invention qui concerne la détermination d'indicateurs de provenance de la dégradation observée sur une cellule. Autrement dit, on cherche à caractériser le type de dégradation subie par une cellule à partir d'indicateurs intermédiaires obtenus qui dépendent des coefficients de correction $\mu_k$.

La méthode proposée selon ce troisième mode de réalisation est représentée par l'organigramme de la figure 6.

Elle consiste principalement en trois étapes principales. La méthode est appliquée à la suite de celle décrite à la figure 5 et débute par la détermination 505 de coefficients de correction pour chaque mesure associée à chaque grandeur physique parmi la température, la densité de courant, la pression d'air ou d'oxygène.

Dans une deuxième étape 506, on détermine, pour au moins certaines grandeurs physiques, un indicateur intermédiaire de dégradation liée à l'influence de chaque grandeur physique. Les étapes 505,506 sont réalisées pour plusieurs grandeurs physiques différentes.

Dans une troisième étape 507, on détermine au moins un indicateur de provenance de la dégradation, à partir d'une combinaison de plusieurs indicateurs intermédiaires. La provenance de la dégradation concerne une dégradation par noyage, par assèchement ou encore par corrosion.

L'étape 506 de détermination d'un indicateur intermédiaire peut prendre plusieurs formes de réalisation.

Une première forme de réalisation consiste à déterminer, à partir d'un coefficient de correction $\mu_k$, une probabilité de dégradation liée à la grandeur physique associée. Cela s'applique notamment pour la température, la pression d'air et la densité de courant.

La probabilité de dégradation est, par exemple, modélisée au moyen de fonctions probabilistes de bases telles que des fonctions sigmoïdes ou des lois de type Weibull. La probabilité de dégradation est déterminée en considérant que celle-ci est plus ou moins élevée selon la valeur du coefficient de correction $\mu_k$ par rapport à 1. Une valeur de probabilité est choisie pour correspondre à la valeur $\mu_k=1$, par exemple une valeur de probabilité égale à 0.4, puis l'évolution de la probabilité en fonction de la valeur de $\mu_k$ est tracée en fonction du type de dégradation.

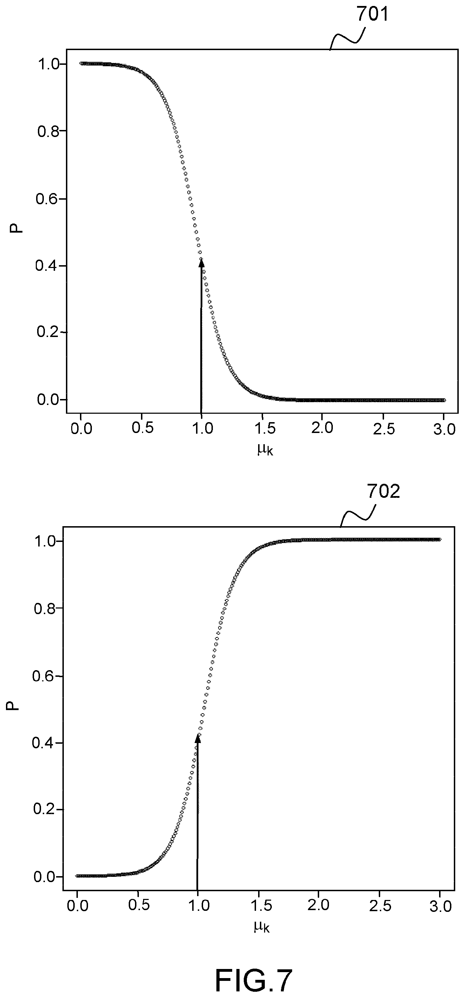

La figure 7 illustre deux exemples de courbes de probabilité 701,702 en fonction de la valeur d'un coefficient de correction. Le sens d'évolution de la fonction (et donc le choix de la courbe 701 ou 702) dépend de l'origine de la dégradation. Par exemple, il est connu que la température diminue lors d'une dégradation par noyage. Pour estimer un indicateur de dégradation par noyage, l'indicateur intermédiaire lié à la température sera construit à l'aide d'une fonction décroissante du type de la courbe 701. A l'inverse, pour estimer un indicateur de dégradation via une cause engendrée par une augmentation de la température, une fonction croissante du type de la courbe 702 est choisie pour l'indicateur intermédiaire lié à la température.

Concernant la pression d'air et la densité de courant, ces deux grandeurs interviennent dans le modèle électrochimique via des logarithmes népériens. L'évolution de la grandeur dépend donc du signe du logarithme népérien de sa valeur. S'il est négatif, cela signifie que la valeur a diminué après correction par un facteur $\mu_k$ supérieur à 1, s'il est positif, cela signifie que la valeur a augmenté après correction par un facteur $\mu_k$ supérieur à 1.

De même que pour la température, selon l'origine de la dégradation que l'on cherche à estimer (noyage ou assèchement par exemple), on choisit une fonction croissante 702 ou une fonction décroissante 701 pour estimer la probabilité de dégradation liée à l'influence de la grandeur physique considérée (pression d'air ou densité de courant).

Dans une variante de réalisation de l'étape 506, un calcul de taux d'humidité est réalisé, par exemple au moyen des relations suivantes :

[Math. 18]

$$\lambda_m = \left( \frac{e_m}{R_m S} e^{\frac{1268}{T_t}} + 21.41 \right) \frac{1}{33.75} \quad (18)$$

[Math. 19]

$$\lambda_m = 0.043 + 17.81 * HR_m - 38.85 HR_m^2 + 36 * HR_m^3 \quad (19)$$

$HR_m$ est le taux d'humidité, $\lambda_m$ est un paramètre intermédiaire, $R_m$ est la résistance de la membrane d'une cellule qui fait partie des grandeurs mesurées, $e_m$ est l'épaisseur de la membrane.

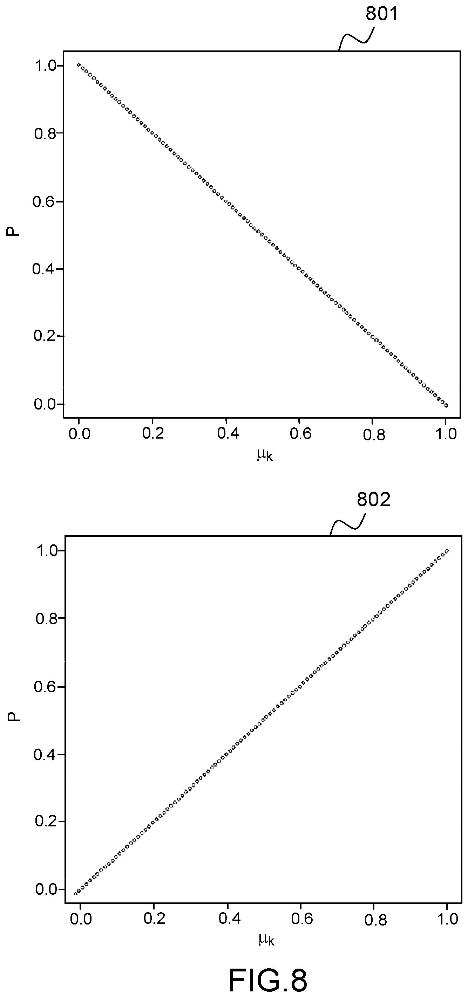

La mesure du taux d'humidité $HR_m$ est convertie en une probabilité de dégradation liée à l'humidité au moyen de droites telles que représentées sur la figure 8. Lorsque l'origine de la dégradation recherchée est un assèchement, on considère une droite décroissante 801 avec l'augmentation du taux d'humidité. Lorsque l'origine de la dégradation recherchée est un noyage, on considère une droite croissante 802.

Le même principe peut être appliqué en remplaçant le taux d'humidité par la résistance de la membrane $R_m$.

Concernant la tension le facteur correctif est directement calculé par le rapport $\mu = \frac{U^{REF}}{U^i}$ obtenu par la mesure, avec $u^{REF}$ la tension de référence et $u^i$ la tension aux bornes de la cellule i.

On note $P_{HRm}, P_P, P_j, P_T, P_R, P_U$, les probabilités de dégradation liées à l'influence respective du taux d'humidité, de la pression d'air, de la densité de courant, de la température, de la résistance de la membrane et de la tension.

Dans l'étape 507, on détermine un indicateur de provenance de la dégradation en combinant plusieurs de ces probabilités.

Selon un premier exemple de réalisation, on détermine un indicateur de dégradation lié à un noyage d'une cellule. On considère qu'un noyage résulte de trois conditions conjointes : une augmentation du taux d'humidité, une diminution de la pression d'air et une diminution de la densité de courant. La probabilité de dégradation par noyage $P_{noy}$ est alors égale à $P_{noy} = P_{HRm} * P_P * P_j$. Dans une variante, on peut considérer en outre l'influence d'une diminution de la température en calculant la probabilité de dégradation par noyage en deux temps : $P_{int} = P_{HRm} * P_P * P_j$, puis $P_{noy} = 1-(1-P_{int})*(1-P_T)$.

Selon un deuxième exemple de réalisation, on détermine un indicateur de dégradation lié à un assèchement d'une cellule. On considère qu'un assèchement résulte de la combinaison de quatre conditions conjointes : une augmentation du taux d'humidité, une augmentation de la résistance, une augmentation de la pression d'air et une diminution de la tension. La probabilité de dégradation par assèchement $P_{ass}$ est égale à $P_{ass} = P_{HRm} * P_P * P_R * P_U$.

Selon un troisième exemple de réalisation, on détermine un indicateur de dégradation lié à une corrosion qui résulte d'une augmentation du taux d'humidité, d'une augmentation de la tension et d'une augmentation de la température. La probabilité de dégradation par corrosion est égale à $P_{cor} = P_{HRm} * P_U * P_T$.

L'invention peut être mise en œuvre en tant que programme d'ordinateur comportant des instructions pour son exécution. Le programme d'ordinateur peut être enregistré sur un support d'enregistrement lisible par un processeur. La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués (*"Cloud computing"*), éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités. Le code exécutable peut également être téléchargeable depuis un serveur distant.

Le programme d'ordinateur peut comprendre un code source, un code objet, un code source intermédiaire ou un code objet partiellement compilé ou toute autre forme d'instructions de code de programme adaptées pour mettre en œuvre l'invention sous la forme d'un programme d'ordinateur.

Un tel programme peut présenter diverses architectures fonctionnelles. Par exemple, un programme d'ordinateur selon l'invention peut être décomposé en une ou plusieurs routines qui peuvent être adaptées à exécuter une ou plusieurs fonctions de l'invention telles que décrites précédemment. Les routines peuvent être enregistrées ensemble dans un même fichier exécutable mais peuvent également être sauvegardées dans un ou plusieurs fichiers externes sous la forme de librairies qui sont associées à un programme principal de façon statique ou dynamique. Les routines peuvent être appelées depuis le programme principal mais peuvent également comprendre des appels à d'autres routines ou sous-routines.

Tous les procédés ou étapes de procédés, programmes ou sous-programmes décrits sous la forme d'organigrammes doivent être interprétés comme correspondant à des modules, segments ou portions de code de programme qui incluent une ou plusieurs instructions de code pour implémenter les fonctions logiques et les étapes de l'invention décrites.

Alternativement, l'invention peut aussi être mise en œuvre au moyen d'un processeur qui peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). La technique de l'invention peut se réaliser sur une machine de calcul reprogrammable (un processeur ou un micro contrôleur par exemple) exécutant un programme comprenant une séquence d'instructions, ou sur une machine de calcul dédiée (par exemple un ensemble de portes logiques comme un FPGA ou un ASIC, ou tout autre module matériel).

Les différents indicateurs calculés au cours du temps peuvent être restitués à un utilisateur via un écran d'affichage ou toute autre interface graphique.

Lorsqu'une alerte de maintenance est déclenchée par la méthode selon l'invention, l'alerte peut être visuelle ou sonore.

L'invention peut être implémentée dans un organe d'aide à la maintenance et correspond à un outil permettant d'automatiser la maintenance d'une pile à combustible à bord d'un véhicule.

**[Références]**

[1] C. Robin, M. Gerard, M. Quinaud, J. d Arbigny, and Y. Bultel, "Proton exchange membrane fuel cell model for aging predictions: Simulated equivalent active surface area loss and comparisons with durability tests," Journal of Power Sources, vol. 326, pp. 417-427, 2016.

[2] J. C. Amphlett, R. M. Baumert, R. F. Mann, B. A. Peppley, P. R. Roberge, and T. J. Harris, "Performance modeling of the Ballard Mark IV solid polymer electrolyte fuel cell I. Mechanistic model development," Journal of the Electrochemical Society, vol. 142, no. 1, pp. 1-8, 1995.

[3] Cooper, KR and Smith, M ,Electrical test methods for on-line fuel cell ohmic resistance measurement, Journal of Power Sources 160 (2006) 1088-1095

[4] Hazewinkel, Michiel, ed. (2001) [1994], "Orthogonalization", Encyclopedia of Mathematics, Springer Science+Business Media B.V. / Kluwer Academic Publishers, ISBN 978-1-55608-010-4.

## Revendications

1. Méthode, mise en œuvre par ordinateur, de détermination d'un indicateur de dégradation d'au moins une cellule d'une pile à combustible (PAC) comprenant une pluralité de cellules (C1,C2,Cn) ayant chacune une surface active, la méthode comprenant les étapes récursives de, à chaque nouvel instant t :

   - Recevoir (301) un ensemble de mesures de grandeurs physiques caractéristiques du fonctionnement de la pile à combustible,
   - Appliquer (302) un filtre de Kalman linéaire auxdites mesures, le filtre de Kalman étant défini à partir d'un modèle électrochimique du fonctionnement de la pile à combustible reliant lesdites grandeurs physiques à une variable d'état représentative d'une perte de la surface active entre un instant initial et l'instant t,
   - Ledit modèle électrochimique étant linéarisé pour modéliser le fonctionnement de la pile à combustible sous la forme d'un système dynamique dont les états sont estimables par un filtre de Kalman,
   - Déterminer (303) l'indicateur de dégradation à partir de la variable d'état estimée par le filtre de Kalman.

2. Méthode de détermination d'un indicateur de dégradation selon la revendication 1 dans laquelle ledit ensemble de mesures comprend une mesure de la tension aux bornes d'un groupe de cellules de la pile à combustible comprenant au moins une cellule, une mesure du courant ou de la densité de courant traversant la pile à combustible, une mesure de la température, une mesure de la pression d'oxygène dans la pile à combustible, une mesure de la résistance de la membrane d'au moins une cellule.

3. Méthode de détermination d'un indicateur de dégradation selon la revendication 2 dans laquelle le modèle électrochimique du fonctionnement de la pile à combustible est un modèle de la surtension aux bornes dudit groupe de cellules.

4. Méthode de détermination d'un indicateur de dégradation selon la revendication 3 comprenant la détermination d'une estimée de la surtension aux bornes dudit groupe de cellules à partir de la mesure de tension aux bornes dudit groupe de cellules, de la mesure du courant et de la mesure de la résistance de la membrane d'au moins une cellule.

5. Méthode de détermination d'un indicateur de dégradation selon l'une des revendications 2 à 4 dans laquelle la mesure de tension est réalisée aux bornes de la pile à combustible et est moyennée pour produire une estimée de la tension moyenne aux bornes d'une ou plusieurs cellule(s) de la pile.

6. Méthode de détermination d'un indicateur de dégradation selon la revendication 5 comprenant, pour un groupe d'au moins une cellule, la détermination d'un premier indicateur de référence (501) calculé à partir de l'estimée de la tension moyenne et d'un second indicateur individualisé (502) calculé à partir d'une mesure de la tension aux bornes dudit groupe, la méthode comprenant en outre une étape de déterminer (505), pour au moins une grandeur physique dudit modèle électrochimique, un coefficient de correction de la mesure associée, le coefficient de correction étant déterminé de manière à prendre en compte l'influence de la grandeur physique sur les différences observées entre le premier indicateur de référence et le second indicateur individualisé.

**7.** Méthode de détermination d'un indicateur de dégradation selon la revendication 6 comprenant les étapes de :

- Exprimer le premier indicateur de référence et le second indicateur individualisé dans une base définie par les grandeurs physiques à partir dudit modèle électrochimique,
- Convertir (503) le premier indicateur de référence et le second indicateur individualisé dans une base orthogonalisée,
- Identifier (504) les coefficients du premier indicateur de référence dans la base orthogonalisée avec les coefficients du second indicateur individualisé dans la base orthogonalisée,
- En déduire (505) un coefficient de correction de la mesure de chaque grandeur physique.

**8.** Méthode de détermination d'un indicateur de dégradation selon l'une des revendications 6 à 7 comprenant en outre une étape de déterminer (507) un indicateur de provenance de la dégradation parmi lesquels un indicateur de dégradation par noyage, un indicateur de dégradation par assèchement, un indicateur de dégradation par corrosion.

**9.** Méthode de détermination d'un indicateur de dégradation selon la revendication 8 comprenant une étape de générer (506), pour au moins une grandeur physique caractéristique du fonctionnement de la pile à combustible, un indicateur intermédiaire de dégradation liée à l'influence de cette grandeur physique, à partir du coefficient de correction déterminé pour cette grandeur physique.

**10.** Méthode de détermination d'un indicateur de dégradation selon la revendication 9 comprenant la détermination (507) de l'indicateur de provenance de la dégradation à partir d'une combinaison de plusieurs indicateurs intermédiaires de dégradation liée à l'influence de différentes grandeurs physiques.

**11.** Programme d'ordinateur comportant des instructions pour l'exécution de la méthode de détermination d'un indicateur de dégradation d'au moins une cellule d'une pile à combustible selon l'une quelconque des revendications précédentes, lorsque le programme est exécuté par un processeur.

**12.** Support d'enregistrement lisible par un processeur sur lequel est enregistré un programme comportant des instructions pour l'exécution de la méthode de détermination d'un indicateur de dégradation d'au moins une cellule d'une pile à combustible selon l'une quelconque des revendications 1 à 10, lorsque le programme est exécuté par un processeur.

**13.** Système pour déterminer un indicateur de dégradation d'au moins une cellule d'une pile à combustible comprenant une pluralité de cellules, , le système comprenant plusieurs capteurs pour mesurer différentes grandeurs physiques caractéristiques du fonctionnement de la pile à combustible et un calculateur pour exécuter la méthode de détermination d'un indicateur de dégradation selon l'une quelconque des revendications 1 à 10.

**14.** Système selon la revendication 13 comprenant en outre une interface visuelle pour afficher au moins une représentation graphique générée par le calculateur.

**15.** Système selon l'une des revendications 13 ou 14 dans lequel le système et la pile à combustible sont destinés à être embarqués dans un véhicule en fonctionnement.

**Patentansprüche**

**1.** Computergestütztes Verfahren zur Bestimmung eines Verschlechterungsindikators mindestens einer Zelle einer Brennstoffzelle (PAC), die eine Vielzahl von Zellen (C1, C2, Cn) umfasst, die jeweils eine aktive Oberfläche aufweisen, wobei das Verfahren die folgenden rekursiven Schritte umfasst, zu jedem neuen Zeitpunkt t:

- Empfangen (301) eines Satzes von Messungen physikalischer Größen, die für den Betrieb der Brennstoffzelle charakteristisch sind,
- Anwenden (302) eines linearen Kalman-Filters auf die Messungen, wobei der Kalman-Filter anhand eines elektrochemischen Modells des Betriebs der Brennstoffzelle definiert wird, das die physikalischen Größen mit einer Zustandsvariablen verbindet, die einen Verlust der aktiven Oberfläche zwischen einem Anfangszeitpunkt und dem Zeitpunkt t darstellt,

- wobei das elektrochemische Modell linearisiert wird, um den Betrieb der Brennstoffzelle in Form eines dynamischen Systems zu modellieren, dessen Zustände durch einen Kalman-Filter schätzbar sind,
- Bestimmen (303) des Verschlechterungsindikators anhand der durch den Kalman-Filter geschätzten Zustandsvariablen.

2. Verfahren zur Bestimmung eines Verschlechterungsindikators nach Anspruch 1, wobei der Satz von Messungen eine Messung der Spannung an den Anschlüssen einer Gruppe von Zellen der Brennstoffzelle, der mindestens eine Zelle umfasst, eine Messung des Stroms oder der Stromdichte, die durch die Brennstoffzelle fließt, eine Temperaturmessung, eine Sauerstoffdruckmessung in der Brennstoffzelle, eine Messung des Membranwiderstands mindestens einer Zelle umfasst.

3. Verfahren zur Bestimmung eines Verschlechterungsindikators nach Anspruch 2, wobei das elektrochemische Modell des Betriebs der Brennstoffzelle ein Modell der Überspannung an den Anschlüssen der Gruppe von Zellen ist.

4. Verfahren zur Bestimmung eines Verschlechterungsindikators nach Anspruch 3, umfassend die Bestimmung einer Schätzung der Überspannung an den Anschlüssen der Gruppe von Zellen anhand der Messung der Spannung an den Anschlüssen der Gruppe von Zellen, der Messung des Stroms und der Messung des Membranwiderstands mindestens einer Zelle.

5. Verfahren zur Bestimmung eines Verschlechterungsindikators nach einem der Ansprüche 2 bis 4, wobei die Messung der Spannung an den Anschlüssen der Brennstoffzelle durchgeführt und gemittelt wird, um eine Schätzung der durchschnittlichen Spannung an den Anschlüssen einer oder mehrerer Zellen der Zelle zu erzeugen.

6. Verfahren zur Bestimmung eines Verschlechterungsindikators nach Anspruch 5, das für eine Gruppe von mindestens einer Zelle die Bestimmung eines ersten Referenzindikators (501), der anhand der Schätzung der mittleren Spannung berechnet wird, und eines zweiten individualisierten Indikators (502), der anhand einer Messung der Spannung an den Anschlüssen der Gruppe berechnet wird, umfasst, wobei das Verfahren ferner einen Schritt umfasst, bei dem für mindestens eine physikalische Größe des elektrochemischen Modells ein Korrekturkoeffizient für die zugehörige Messung bestimmt wird (505), wobei der Korrekturkoeffizient so bestimmt wird, dass der Einfluss der physikalischen Größe auf die beobachteten Unterschiede zwischen dem ersten Referenzindikator und dem zweiten individualisierten Indikator berücksichtigt wird.

7. Verfahren zur Bestimmung eines Verschlechterungsindikators nach Anspruch 6, folgende Schritte umfassend:

- Ausdrücken des ersten Referenzindikators und des zweiten individualisierten Indikators in einer durch die physikalischen Größen definierten Basis anhand des elektrochemischen Modells,
- Umwandeln (503) des ersten Referenzindikators und des zweiten individualisierten Indikators in eine orthogonalisierte Basis,
- Identifizieren (504) der Koeffizienten des ersten Referenzindikators in der orthogonalisierten Basis mit den Koeffizienten des zweiten individualisierten Indikators in der orthogonalisierten Basis,
- daraus Ableiten (505) eines Korrekturkoeffizienten der Messung jeder physikalischen Größe.

8. Verfahren zur Bestimmung eines Verschlechterungsindikators nach einem der Ansprüche 6 bis 7, das ferner einen Schritt umfasst, bei dem ein Indikator für die Herkunft der Verschlechterung bestimmt wird (507), darunter ein Indikator für die Verschlechterung durch Flutung, ein Indikator für die Verschlechterung durch Austrocknung, ein Indikator für die Verschlechterung durch Korrosion.

9. Verfahren zur Bestimmung eines Verschlechterungsindikators nach Anspruch 8, umfassend einen Schritt des Erzeugens (506), für mindestens eine für den Betrieb der Brennstoffzelle charakteristische physikalische Größe, eines Zwischenindikators der Verschlechterung, die mit dem Einfluss dieser physikalischen Größe zusammenhängt, anhand des für diese physikalische Größe ermittelten Korrekturkoeffizienten.

10. Verfahren zur Bestimmung eines Verschlechterungsindikators nach Anspruch 9, umfassend die Bestimmung (507) des Indikators für die Herkunft der Verschlechterung anhand einer Kombination mehrerer Zwischenindikatoren der Verschlechterung, die mit dem Einfluss verschiedener physikalischer Größen zusammenhängt.

**11.** Computerprogramm mit Anweisungen zur Durchführung des Verfahrens zur Bestimmung eines Verschlechterungsindikators für mindestens eine Zelle einer Brennstoffzelle nach einem der vorhergehenden Ansprüche, wenn das Programm von einem Prozessor ausgeführt wird.

**12.** Prozessorlesbares Aufzeichnungsmedium, auf dem ein Programm aufgezeichnet ist, das Anweisungen zur Durchführung des Verfahrens zur Bestimmung eines Verschlechterungsindikators mindestens einer Zelle einer Brennstoffzelle nach einem der Ansprüche 1 bis 10 umfasst, wenn das Programm von einem Prozessor ausgeführt wird.

**13.** System zur Bestimmung eines Verschlechterungsindikators mindestens einer Zelle einer Brennstoffzelle, die eine Vielzahl von Zellen umfasst, wobei das System mehrere Sensoren zur Messung verschiedener physikalischer Größen umfasst, die für den Betrieb der Brennstoffzelle charakteristisch sind, sowie einen Rechner zur Durchführung des Verfahrens zur Bestimmung eines Verschlechterungsindikators nach einem der Ansprüche 1 bis 10.

**14.** System nach Anspruch 13, ferner umfassend eine visuelle Schnittstelle, um mindestens eine vom Rechner erzeugte grafische Darstellung anzuzeigen.

**15.** System nach einem der Ansprüche 13 oder 14, wobei das System und die Brennstoffzelle dazu bestimmt sind, in einem fahrenden Fahrzeug installiert zu werden.

**Claims**

**1.** A computer-implemented method for determining a degradation indicator of at least one cell of a fuel cell (PAC) comprising a plurality of cells (C1, C2, Cn) each having an active surface, the method comprising, for each new instant t, the recursive steps of:

- receiving (301) a set of measurements of physical quantities characteristic of the operation of the fuel cell;
- applying (302) a linear Kalman filter to said measurements, with the Kalman filter being defined based on an electrochemical model of the operation of the fuel cell connecting said physical quantities to a state variable representing a loss of the active surface between an initial instant and the instant t;
- said electrochemical model being linearised to model the operation of the fuel cell in the form of a dynamic system, the states of which can be estimated by a Kalman filter;
- determining (303) the degradation indicator based on the state variable estimated by the Kalman filter.

**2.** The method for determining a degradation indicator according to claim 1, wherein said set of measurements comprises a measurement of the voltage across the terminals of a group of cells of the fuel cell comprising at least one cell, a measurement of the current or of the current density passing through the fuel cell, a measurement of the temperature, a measurement of the oxygen pressure in the fuel cell, a measurement of the resistance of the membrane of at least one cell.

**3.** The method for determining a degradation indicator according to claim 2, wherein the electrochemical model of the operation of the fuel cell is a model of the overvoltage across the terminals of said group of cells.

**4.** The method for determining a degradation indicator according to claim 3, comprising determining an estimate of the overvoltage across the terminals of said group of cells based on the voltage measurement across the terminals of said group of cells, measuring the current and measuring the resistance of the membrane of at least one cell.

**5.** The method for determining a degradation indicator according to any of claims 2 to 4, wherein the voltage measurement is carried out across the terminals of the fuel cell and is averaged to produce an estimate of the average voltage across the terminals of one or more cells of the fuel cell.

**6.** The method for determining a degradation indicator according to claim 5, comprising, for a group of at least one cell, determining a first reference indicator (501) computed based on the estimate of the average voltage and a second individualised indicator (502) computed based on a measurement of the voltage across the terminals of said group, the method further comprising a step of determining (505), for at least one physical quantity of said electrochemical model, a correction coefficient of the associated measurement, with the correction coefficient being determined so as to take into account the influence of the physical quantity on the differences observed between the first reference indicator and the second individualised indicator.

7. The method for determining a degradation indicator according to claim 6, comprising the steps of:

- expressing the first reference indicator and the second individualised indicator in a base defined by the physical quantities based on said electrochemical model;
- converting (503) the first reference indicator and the second individualised indicator into an orthogonalised base;
- identifying (504) the coefficients of the first reference indicator in the orthogonalised base with the coefficients of the second individualised indicator in the orthogonalised base;
- deducing (505) a correction coefficient of the measurement of each physical quantity therefrom.

8. The method for determining a degradation indicator according to any of claims 6 to 7, further comprising a step of determining (507) a provenance indicator for the degradation, including a flooding degradation indicator, a dewatering degradation indicator, a corrosion degradation indicator.

9. The method for determining a degradation indicator according to claim 8, comprising a step of generating (506), for at least one physical quantity characteristic of the operation of the fuel cell, an intermediate degradation indicator related to the influence of this physical quantity based on the correction coefficient determined for this physical quantity.

10. The method for determining a degradation indicator according to claim 9, comprising determining (507) the provenance indicator for the degradation based on a combination of several intermediate degradation indicators related to the influence of various physical quantities.

11. A computer program containing instructions for executing the method for determining a degradation indicator of at least one cell of a fuel cell according to any one of the preceding claims, when the program is executed by a processor.

12. A processor-readable storage medium storing a program comprising instructions for executing the method for determining a degradation indicator of at least one cell of a fuel cell according to any one of claims 1 to 10, when the program is executed by a processor.

13. A system for determining a degradation indicator of at least one cell of a fuel cell comprising a plurality of cells, the system comprising several sensors for measuring various physical quantities characteristic of the operation of the fuel cell and a computer for executing the method for determining a degradation indicator according to any one of claims 1 to 10.

14. The system according to claim 13, further comprising a visual interface for displaying at least one graphical representation generated by the computer.

15. The system according to any one of claims 13 or 14, wherein the system and the fuel cell are intended to be placed on board a running vehicle.

FIG.1

FIG.2

EP 3 883 029 B1

FIG.3

FIG.4

501 — Détermination premier indicateur de référence

502 — Détermination second indicateur individualisé

Conversion base orthogonale — 503

Identification coefficients — 504

Détermination coefficients de correction — 505

FIG.5

Détermination coefficients de correction — 505

Détermination indicateur intermédiaire — 506

Détermination indicateur de provenance de dégradation — 507

FIG.6

701

702

FIG.7

801

802

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **XIAN ZHANG**. *An Unscented Kalman Filter based approach for the health monitoring and prognostics of a polymer electrolyte membrane fuel cell*
- **BRESSEL MATHIEU**. *Extended Kalman Filter for prognostic of proton exchange membrane fuel cell*
- **C. ROBIN** ; **M. GERARD** ; **M. QUINAUD** ; **J. D ARBIGNY** ; **Y. BULTEL**. Proton exchange membrane fuel cell model for aging predictions: Simulated equivalent active surface area loss and comparisons with durability tests. *Journal of Power Sources*, 2016, vol. 326, 417-427
- **J. C. AMPHLETT** ; **R. M. BAUMERT** ; **R. F. MANN** ; **B. A. PEPPLEY** ; **P. R. ROBERGE** ; **T. J. HARRIS**. Performance modeling of the Ballard Mark IV solid polymer electrolyte fuel cell I. Mechanistic model development. *Journal of the Electrochemical Society*, 1995, vol. 142 (1), 1-8
- **COOPER, KR** ; **SMITH, M**. Electrical test methods for on-line fuel cell ohmic resistance measurement. *Journal of Power Sources*, 2006, vol. 160, 1088-1095
- Orthogonalization. Encyclopedia of Mathematics. Springer Science+Business Media B.V. / Kluwer Academic Publishers, 2001